# EUROPEAN PATENT APPLICATION

(11) **EP 4 683 084 A1**
(43) Date of publication of application: **21.01.2026**
(21) Application number: 24811407.6
(22) Date of filing: 22.05.2024
(51) Int. Cl.: H01M 50/383, H01M 50/30, H01M 50/204, H01M 50/249

(54) **BATTERY PACK WITH IMPROVED VENTING**

(30) Priority: 24.05.2023 KR 20230066904
(71) Applicant: LG Energy Solution, Ltd., Seoul 07335 (KR)
(72) Inventor: MIN, Jinki, Daejeon 34122 (KR); RHIM, Soeun, Daejeon 34122 (KR)
(74) Representative: Plasseraud IP
(86) International application number: PCT/KR2024/006940
(87) International publication number: WO 2024/242469

(57) **Abstract**

The present invention provides a structure of a battery pack including a plurality of battery modules juxtaposed in widthwise direction, each of the plurality of battery modules including: a rear cover connected to a rear end of the battery module, the rear cover having open front end and made of a heat-resistant material, wherein the rear cover includes: a pair of partition plates extending in rear direction from two widthwise ends of a rear end of the battery module; and a venting hole facing upward direction.

## Description

### [TECHNICAL FIELD]

This application claims the benefit of priority based on Korean Patent Application No. 10-2023-0066904 filed on May 24, 2023, entire content disclosed in the document of the patent applications is included as a part of this specification.

The present invention relates to a battery pack with improved ventilation, and more particularly, to a battery pack capable of preventing thermal runaway and controlling venting direction.

### [BACKGROUND ART]

Secondary batteries, which provides ease of application depending on the product group and have electrical characteristics such as high energy density, are widely applied not only to portable devices, but also to electric vehicles or hybrid vehicles driven by an electrical driving source, and power storage devices. These secondary batteries are attracting attention as a new energy source for improving eco-friendliness and energy efficiency, not only because they have the primary advantage of being able to dramatically reduce the use of fossil fuels, but also because they do not generate any by-products due to energy use.

While small mobile devices use one or two or three battery cells per device, medium to large devices such as vehicles require high output and large capacity. Therefore, a medium to large-sized battery module in which multiple battery cells are electrically connected is used.

Since it is desirable for medium to large-sized battery modules to be manufactured in as small and light as possible, rectangular batteries and pouch-type batteries that may be stacked with high integration and have a small weight-to-capacity battery are mainly used as battery cells for medium to large-sized battery modules.

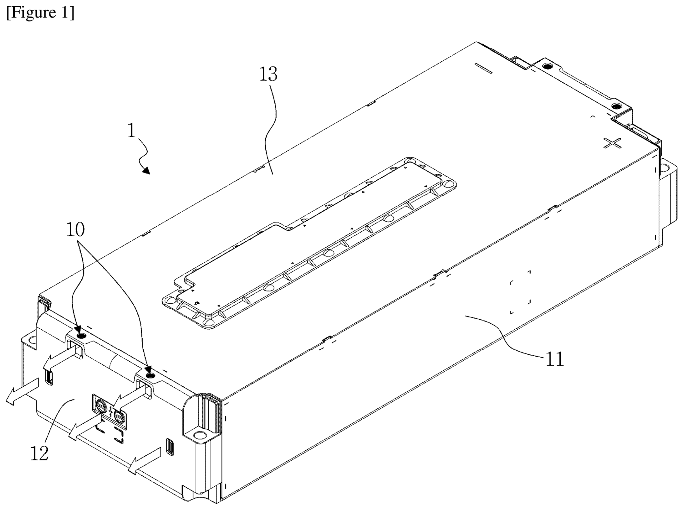

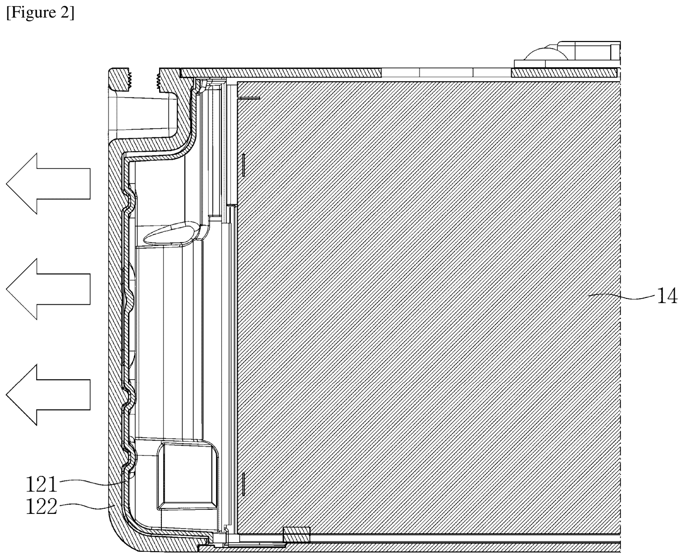

FIG. 1 illustrates the structure of a general battery module and the venting direction at the rear end thereof, and FIG. 2 illustrates a cross-section of the battery module of FIG. 1. Referring to FIGS. 1 and 2, a general battery module 1 is manufactured by accommodating a plurality of stacked battery cells 14 in a housing. The housing generally includes of a U frame 11, a top plate 13 and a pair of end plates 12. The end plate 12 has a dual structure of a metal portion 122 bonded to the U frame 11 and an injection portion 121 that insulates the metal portion 122 from the battery cell 14 within the U frame 11.

The battery cell 14 has a risk of ignition due to shock, short circuit, etc. High-temperature gas and dust generated as a result may be discharged from the battery module 1. Here, the gas and dust may be discharged in the rear direction through the bonding area of the metal portion 122 and the U frame 11 and through the portion of the injection portion 121 exposed to the outside.

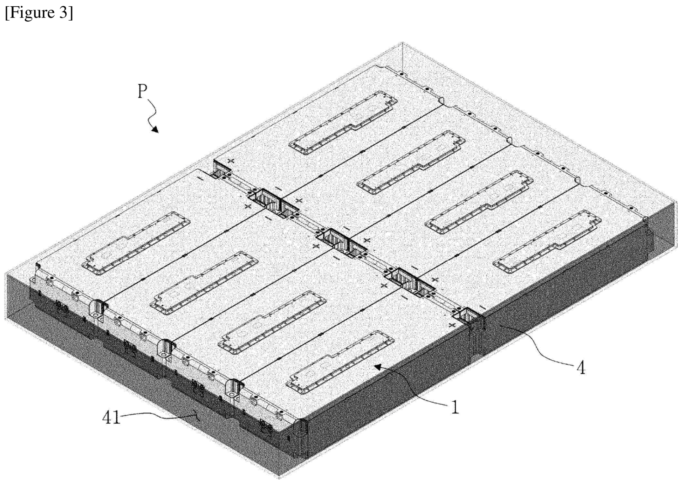

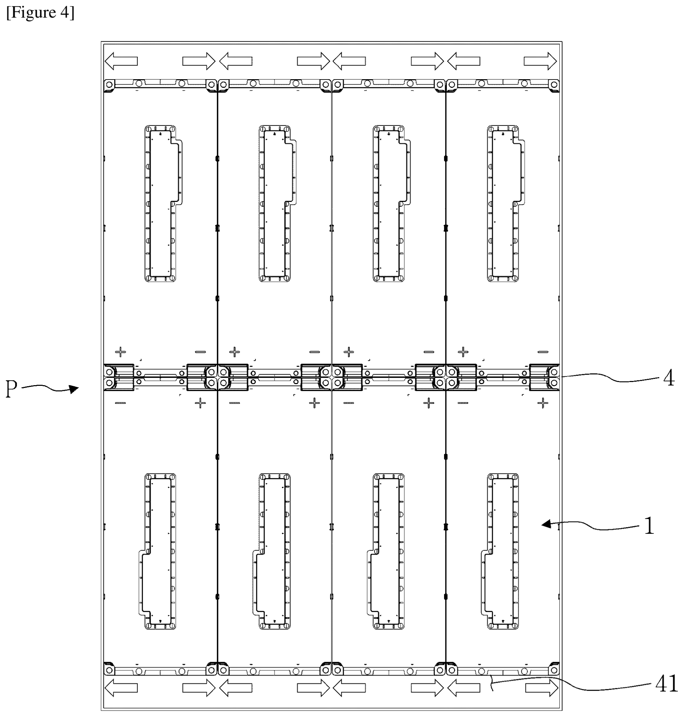

FIG. 3 illustrates a structure of a battery pack containing the battery module of FIG. 1, and FIG. 4 illustrates thermal propagation occurring in the rear space of the battery pack of FIG. 3. Referring to FIGS. 3 and 4, a plurality of battery modules 1 may be integrated and accommodated in a pack frame 4 to constitute a battery pack P. Gas and dust discharged from the battery module 1 may be discharged to the outside of the pack frame 4 through a rear space 41 between the pack frame 4 and each battery module 1 and through a venting device (not shown) that connects the inside and outside.

Here, the gas discharged from the battery module 1 has a very high temperature, and there is a risk that other battery modules may additionally ignite due to such high-temperature gas. In addition, in order for gas to be discharged through the venting device, it is necessary that the gas discharged from the battery module 1 is guided upward. However, due to the rear space 41, the gas discharged from the battery module 1 in the rear direction may be disperse in the lateral direction such that heat is transmitted to other battery modules, which may cause serial ignition between the modules.

Moreover, here, dust discharged upward through the rear space may close the venting path including the venting device, making additional venting difficult.

### [DETAILED DESCRIPTION OF THE INVENTION]

### [TECHNICAL PROBLEM]

In order to solve above-described problems of the prior art, it is an object of the present invention to provide a structure of a battery module wherein thermal propagation between a plurality of battery modules embedded in a battery pack is prevented. More specifically, the present invention provides a structure of a battery pack capable of preventing thermal propagation from occurring as high-temperature gas and/or flame discharged through the rear end of one battery pack reaches other adjacent battery modules.

It is another object of the present invention to provide a structure of a battery module capable of guiding high-temperature gas and dust discharged from inside the battery module to be discharged in a specific direction. For example, it is an object of the present invention to provide a structure of a battery pack capable of guiding gas discharged through the front and rear ends of the battery module upward.

It is yet another object of the present invention to provide structures of a battery module and battery pack capable of cooling discharged gas.

It is yet another object of the present invention to provide structures of a battery module and battery pack capable of delaying venting and preventing flame generation due to spark leakage.

In addition, It is yet another object of the present invention to provide a structure of a battery pack capable of preventing ignition and obstructing of the venting path due to dust.

The technical problems to be solved by the present invention are not limited to the objects described above, and other objects and advantages of the present invention that are not described may be understood through the following description and will be more clearly understood by the examples of the present invention. Additionally, it is apparent that the objects and advantages of the present invention may be embodied by the means and combinations thereof indicated in the claims.

### [TECHNICAL SOLUTION]

In order to solve the above-described problems, the present invention provides a structure of a battery pack including a plurality of battery modules juxtaposed in widthwise direction, each of the plurality of battery modules including: an end plate constituting at least a portion of a rear surface thereof; and a rear cover disposed at a rear end of the end plate, the rear cover having open front end and made of a heat-resistant material, wherein the rear cover includes: a pair of partition plates extending in rear direction from two widthwise ends of a rear end of the battery module; and a venting hole facing upward direction.

The battery pack may include a pack frame and a plurality of battery modules adjacent to each other and accommodated in the pack frame. Two or more battery modules may arranged with the rear ends thereof face the same direction and are adjacent to each other in the widthwise direction.

The battery module may include a battery cell laminate and a housing to accommodate the same. The housing may include a U frame with open upper, front and rear ends, a top plate covering the open upper end of the U frame, and a pair of end plates covering the open front and rear ends of the U frame.

The rear cover may be made of a heat-resistant material. The rear cover according to an embodiment of the present invention may include a mica (MICA) material.

The rear cover may have an open front end connected to the rear end of the battery module. In addition, it is preferable that the rear cover has an open lower end similar to the front end.

The rear cover may further include an upper plate connecting upper end portions of the pair of partition plates to each other and covers an upper end of the rear cover, Here, the venting hole may be provided in the upper plate.

Additionally, the rear cover may include a rear plate connecting the rear ends of the pair of partition plates to each other and covering a rear end of the rear cover.

The rear cover according to an embodiment of the present invention may have a substantially box shape with open front and lower ends. Accordingly, gas discharged from the battery module in the rear direction may flow into the rear cover from the open front end thereof and be discharged to the upper end thereof through the venting hole. In addition, accordingly, dust discharged from the battery module in the rear direction may flow the rear cover from the open front end thereof and fall to the lower end thereof through the open lower end thereof. As the discharge path of the gas is bent from the rear direction to the upward direction, the gas may lose some of its energy and be cooled and discharged.

The partition plate may isolate the rear end space of the battery module from two widthwise ends thereof. The partition plate may isolate the rear end space of the battery module from the two widthwise ends thereof at least in some sections in the heightwise direction. Here, the partition plate may cover some of the two widthwise ends of the battery module.

The rear cover may be connected to the rear end of the battery module. For example, the rear cover may be connected to the rear end plate. Alternatively, the rear cover may be connected to the U frame or the top plate.

The rear cover may be fastened to a first fastening hole provided in the battery module. The first fastening hole may be provided to face upward at the rear end of the battery module. For example, the first fastening hole may be provided at the end plate, the top plate or the U frame.

Here, a second fastening hole may be provided at the rear cover to face upward direction. Preferably, the second fastening hole may be provided in the upper plate together with the venting hole.

The rear cover according to an embodiment of the present invention may have an upper plate covering a portion of an upper surface of the battery module, and may be fastened to the battery module by a fastening member that penetrates both the first fastening hole and the second fastening hole. The fastening member may be a general fastening member such as a bolt or push rivet, but not limited thereto. For example, the fastening member may be a click fit protrusion provided as part of the rear cover or the battery module.

The rear cover may include a melting frame. The melting frame may have a predetermined melting point lower than that of the rear cover. The melting frame according to an embodiment of the present invention may include a polycarbonate (PC) material.

The melting frame may be in contact with the inner surface or surface of the rear cover. Preferably, the melting frame may be coupled to the rear cover so as to be in contact with the inside of the rear cover.

The melting frame may include a venting delaying portion covering the venting hole.

The melting frame according to an embodiment of the present invention may have a substantially box shape with open front and rear ends, and the venting delaying portion is provided at the upper plate of the melting frame provided at the lower end of the upper plate of the rear cover such that the venting hole is covered from the bottom.

The venting delaying portion may be thinner than other portions of the melting frame. Accordingly, when the venting delaying portion is heated above the melting point, the venting delaying portion may be completely melted faster than other portions of the melting frame.

According to an embodiment of the present invention, an upper plate and a lower plate of the melting frame may be thinner than two side plates thereof. When the upper and lower plates of the melting frame are heated above the melting point, the upper and lower plates may be completely melted faster than other portions of the melting frame. Accordingly, when venting occurs in the battery module, gas discharged from the battery module may be discharged to the upper end of the rear cover, and dust discharged from the battery module may fall to the lower end of the rear cover. Here, such venting may occur with a delay lasting the melting time of the upper and lower plates of the melting frame.

The venting hole may be covered with a mesh, or may have a mesh shape. Alternatively, the venting hole may have a slit shape. The gas discharged from the battery module may be discharged through a small opening in the mesh or slit as described above such that the discharge may be delayed and may be cooled and discharged due to a throttling effect.

The present invention also provides a structure of a vehicle including the battery pack. The battery pack may be built into an electric vehicle or hybrid vehicle as a power source. According to an embodiment of the present invention, gas vented upward from the battery module may be discharged from the inside of the pack frame to the outside through a venting device provided in the pack frame.

### [ADVANTTAGEOUS EFFECTS]

By the technical solution described above, the present invention may provide a structure of a battery pack capable of preventing thermal propagation between modules due to gas discharged from the rear end of the battery module.

Additionally, the present invention may provide structures of battery module and battery pack capable of delaying venting and guiding venting in upward direction.

The present invention may advantageously provide structures of battery module and battery pack capable of preventing leakage of sparks to reduce the possibility of ignition.

The present invention may also provide structures of battery module and battery pack capable of cooling and discharging high-temperature gas.

The present invention may also provide a structure of a battery pack wherein the possibility of ventilation path obstruction and ignition due to dust is significantly reduced.

In addition, the present invention may have various other effects, and the descriptions thereof will be given in each embodiment, or the description of the effects that may be easily inferred by a person skilled in the art will be omitted.

### [BRIEF DESCRIPTION OF DRAWINGS]

FIG. 1 illustrates the structure of a general battery module and the venting direction at the rear end thereof.
FIG. 2 illustrates a cross-section of the battery module of FIG. 1.
FIG. 3 illustrates a structure of a battery pack containing the battery module of FIG. 1.
FIG. 4 illustrates thermal propagation occurring in the rear space of the battery pack of FIG. 3.
FIGS. 5 to 7 illustrate a battery module and a rear cover coupled to each other according to an embodiment of the present invention.
FIG. 8 illustrates a cross-section of a rear cover and a melting frame according to an embodiment of the present invention.
FIGS. 9 and 10 illustrate a battery module and a rear cover fastened to each other according to an embodiment of the present invention.
FIG. 11 illustrates a structure before melting of the melting frame according to an embodiment of the present invention.
FIG. 12 illustrates a cross-section of the structure of FIG. 11.
FIG. 13 illustrates a structure after melting of the melting frame according to an embodiment of the present invention.
FIG. 14 illustrates a cross-section of the structure of FIG. 13.
FIG. 15 illustrates the venting action and thermal propagation prevention action of a battery module according to an embodiment of the present invention.
FIGS. 16 and 17 illustrate the venting action and thermal propagation prevention action of a battery pack, respectively, according to an embodiment of the present invention.
FIG. 17 illustrates the thermal propagation prevention action of a battery pack according to an embodiment of the present invention.
FIGS. 18 and 19 illustrate coupling scheme of a battery module and a rear cover according to another embodiment of the present invention.
FIG. 20 illustrates a structure of a battery module according to another embodiment of the present invention.
FIG. 21 illustrates a cross-section of the battery module of FIG. 20.
FIG. 22 illustrates the venting action and thermal propagation prevention action of a battery module according to another embodiment of the present invention.
FIGS. 23 and 24 illustrate the venting action and thermal propagation prevention action of a battery pack, respectively, according to another embodiment of the present invention.
FIG. 25 illustrates the structure of a vehicle containing a battery pack according to the present invention.

### [DESCRIPTION OF REFERENCE NUMERALS]

1: battery module
   10: first fastening hole
   11: U frame
   12: end plate
      121: injection portion
      122: metal portion
   13: top plate
   14: battery cell
2: rear cover
   20: second fastening hole
   21: upper plate
      211: venting hole
   22: rear plate
   23: partition plate
   24: melting frame
   241: upper plate (venting delaying portion)
   242: lower plate
   243: side plate
30: fastening member
4: pack frame
   41: rear space
P: battery pack
V: vehicle

### [DETAILED DESCRIPTION OF THE PREFERRED EMBODIMENTS]

The above-described objects, features and advantages will be described in detail hereinafter with reference to the accompanying drawings such that those skilled in the art will be able to implement the technical idea of the present invention. In describing the present invention, when it is determined that a detailed description of prior art related to the present invention unnecessarily obscures the gist of the present invention, the detailed description thereof will be omitted. Hereinafter, preferred embodiments according to the present invention will be described in detail with reference to the accompanying drawings. In the drawings, identical reference numerals are used for indicating identical or similar components.

While "first", "second", etc. are used to describe various elements, these elements are of course not limited by these terms. These terms are only used to distinguish one element from another, and unless specifically stated otherwise, a first element may also be a second element.

Throughout the specification, unless stated otherwise, each element may be singular or plural.

Hereinafter, "arranging an element at upper portion (or lower portion) of an element" or "arranging an element at top (or bottom) of an element" refers to not only "arranging an element to be in contact with upper surface (or lower surface)" but also to "arranging an element above upper surface (or lower surface) with another element interposed therebetween."

Additionally, when an element is described as being "connected to," "coupled with," or "in contact with" another element, it should be understood that the element may be "directly connected to," "directly coupled with," or "directly in contact with" another element, or the element may be "connected to," "coupled with," or "in contact with" another element with yet another element interposed therebetween or via yet another element.

The expressions in singular form used herein include expressions in plural form unless the context explicitly dictates otherwise. Terms such as "consists of" or "comprises" used herein should not be construed as necessarily including all of the elements or steps described in the specification, and should be construed as not including some of the elements or steps, or including additional elements or steps.

Throughout the specification, "A and/or B" refers to A, B or A and B unless specifically stated otherwise, and "C to D" refers to from equal to or higher than C to equal to or lower D unless specifically stated otherwise.

FIG. 1 illustrates the structure of a general battery module. Referring to FIG. 1, the battery module 1 may include a plurality of battery cells 14 and a housing accommodating the same. The housing includes a U frame 11 with open upper, front and rear ends, a top plate 13 covering the open upper end of the U frame 11, and a pair of end plates 12 covering the open front and rear ends of the U frame 11, respectively.

FIG. 2 illustrates a cross-section of the battery module of FIG. 1. Referring to FIG. 2, the end plate 12 may include: the metal portion 122 bonded to the U frame 11; and an injection portion 121 disposed inner than the metal portion 122 and electrically insulating the metal portion 122 from the battery cells 14.

Referring to FIGS. 1 and 2, when the battery cell 14 ignites, the injection portion 121 melts, and high-temperature gas and dust may be discharged through the rear end of the battery module 1 via: the bonding area between the end plate 12 and the U frame 11; and the portion exposing the injection portion. The discharged gas may disperse heat to other battery modules through the rear space of the battery module 1, and the discharged dust may be discharged together with the gas to obstruct the venting path.

The present invention provides a structure of a battery pack containing a plurality of battery modules 1 described above wherein thermal propagation is prevented and ventilation is improved, and also provides a structure of a vehicle containing the battery pack.

Hereinafter, a preferred embodiment of the present invention will be described with reference to the accompanying drawings.

### [FIRST EMBODIMENT]

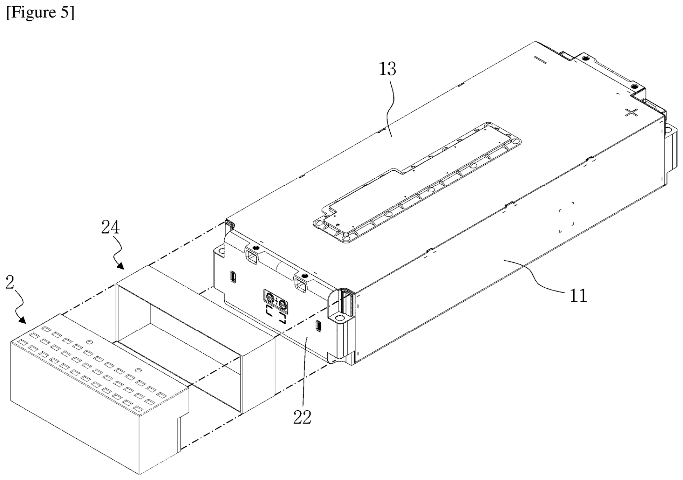

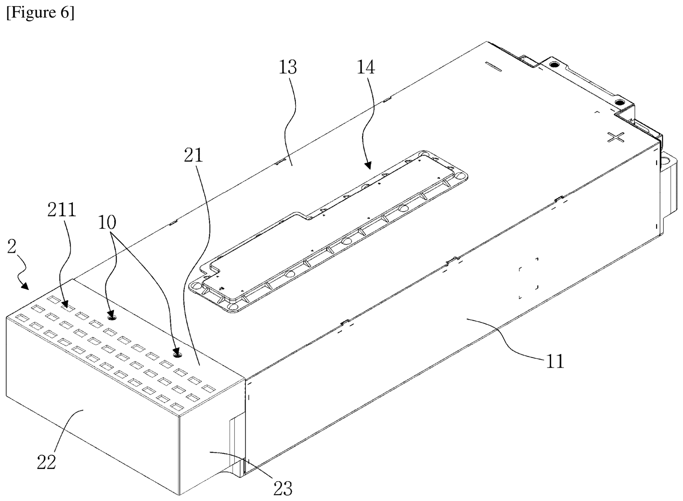

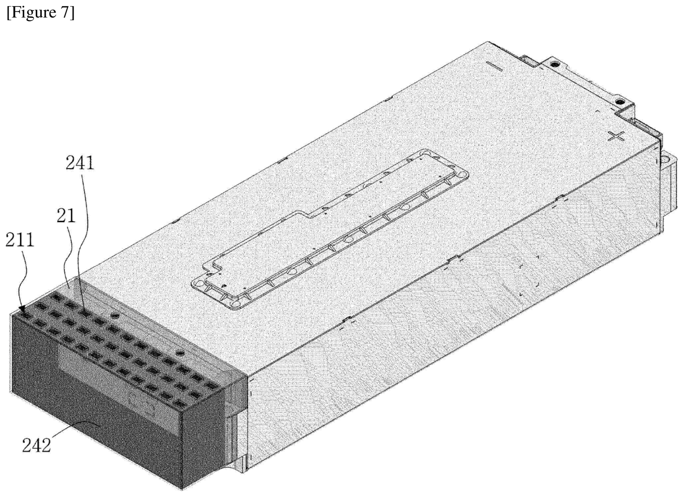

FIGS. 5 to 7 illustrate a battery module and a rear cover coupled to each other according to an embodiment of the present invention. Referring to FIGS. 5 to 7, a battery module according to an embodiment of the present invention may include a rear cover 2 and a melting frame 24.

The rear cover 2 may include a heat-resistant material. The rear cover 2 according to an embodiment of the present invention may include a mica (MICA) material.

The rear cover 2 may have open front end connected to the rear end of the battery module. In addition, it is preferable that the rear cover 2 has an open lower end similar to the front end.

The rear cover 2 may further include an upper plate 21 connecting upper end portions of the pair of partition plates 23 to each other and covers an upper end of the rear cover 2, Here, the venting hole 211 facing upward may be provided in the upper plate 21.

Additionally, the rear cover 2 may include a rear plate 22 connecting the rear ends of the pair of partition plates 23 to each other and covering a rear end of the rear cover 2.

The partition plate 23 may isolate the rear end space of the battery module from two widthwise ends thereof. The partition plate 23 may isolate the rear end space of the battery module from the two widthwise ends thereof at least in some sections in the heightwise direction. Here, the partition plate 23 may cover some of the two widthwise ends of the battery module.

The rear cover 2 according to an embodiment of the present invention may have a substantially box shape with open front and lower ends. Accordingly, gas discharged from the battery module in the rear direction may flow into the rear cover 2 from the open front end thereof and be discharged to the upper end thereof through the venting hole 211. In addition, accordingly, dust discharged from the battery module in the rear direction may flow the rear cover 2 from the open front end thereof and fall to the lower end thereof through the open lower end thereof. As the discharge path of the gas is bent from the rear direction to the upward direction, the gas may lose some of its energy and be cooled and discharged.

Additionally, according to the first embodiment, the rear end space of the battery module is isolated from other battery modules in the widthwise direction by the partition plate, and thus the gas may be prevented from propagating heat to other battery modules through the rear space.

The melting frame 24 may have a predetermined melting point lower than that of the rear cover 2. The melting frame 24 according to an embodiment of the present invention may include a polycarbonate (PC) material.

The melting frame 24 may be in contact with the inner surface or surface of the rear cover 2. Preferably, the melting frame 24 may be coupled to the rear cover 2 so as to be in contact with the inside of the rear cover 2.

The melting frame 24 may include a venting delaying portion 241 covering the venting hole 211. The venting delaying portion 241 may be provided to prevent gas communication through the venting hole 211 in an unmelted state.

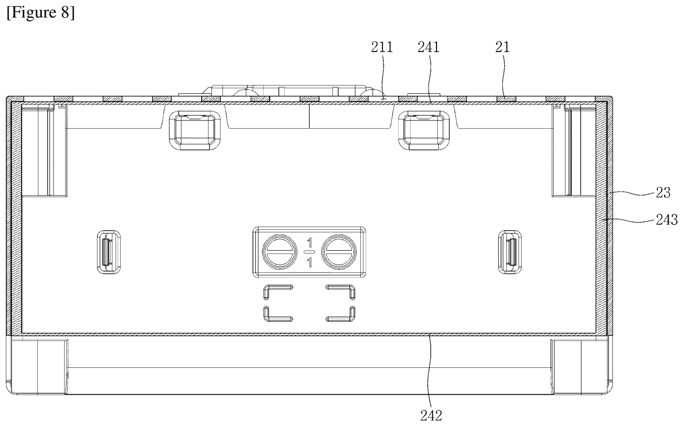

FIG. 8 illustrates a cross-section of a rear cover and a melting frame according to an embodiment of the present invention. Referring to FIG. 8, the venting delaying portion 241 may be thinner than other portions of the melting frame 24. Accordingly, when the venting delaying portion 241 is heated above the melting point, the venting delaying portion 241 may be completely melted faster than other portions of the melting frame 24.

According to an embodiment of the present invention, the melting frame 24 may have a substantially box shape with open front and rear ends, and the venting delaying portion 241 is provided at the upper plate 21 of the melting frame provided at the lower end of the upper plate 21 of the rear cover 2 such that the venting hole 211 is covered from the bottom. Here, an upper plate 241 and a lower plate 242 of the melting frame 24 may be thinner than two side plates 243 thereof.

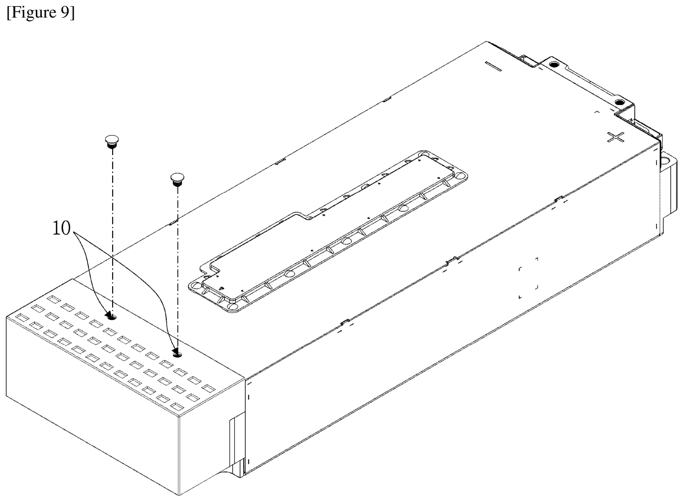

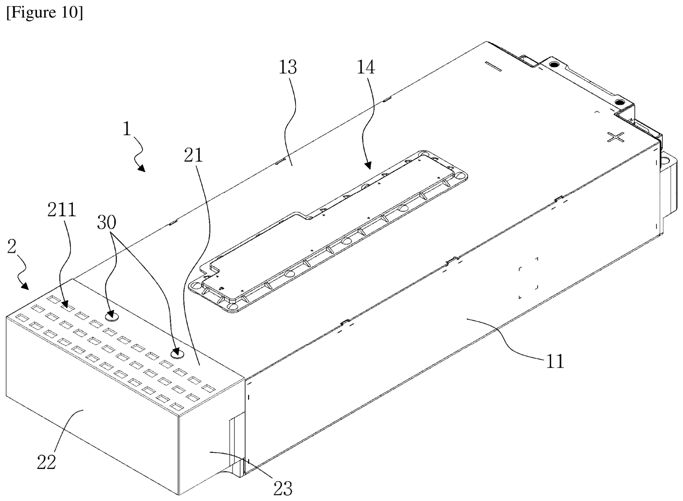

FIGS. 9 and 10 illustrate a battery module and a rear cover fastened to each other according to an embodiment of the present invention. Referring to FIGS. 9 and 10, the rear cover 2 may be fastened to a first fastening hole 10 provided in the battery module. The first fastening hole 10 may be provided to face upward at the rear end of the battery module. For example, the first fastening hole 10 may be provided at the end plate 12, the top plate 13 or the U frame 11.

Here, a second fastening hole 20 may be provided at the rear cover 2 to face upward direction. Preferably, the second fastening hole 20 may be provided in the upper plate 21 of the rear cover 2 together with the venting hole 211.

The rear cover 2 according to an embodiment of the present invention may have an upper plate 21 covering a portion of an upper surface of the battery module, and may be fastened to the battery module by a fastening member 30 that penetrates both the first fastening hole 10 and the second fastening hole 20. The fastening member 30 may be a general fastening member 30 such as a bolt or push rivet, but not limited thereto. For example, the fastening member 30 may be a click fit protrusion provided as part of the rear cover 2 or the battery module.

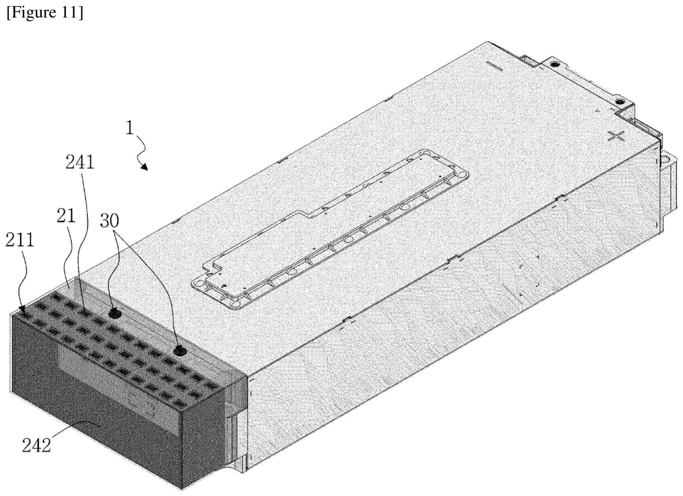

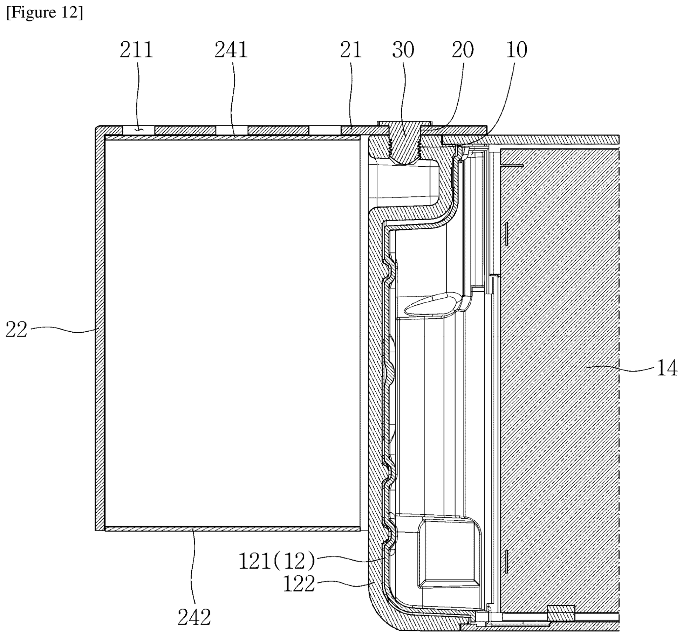

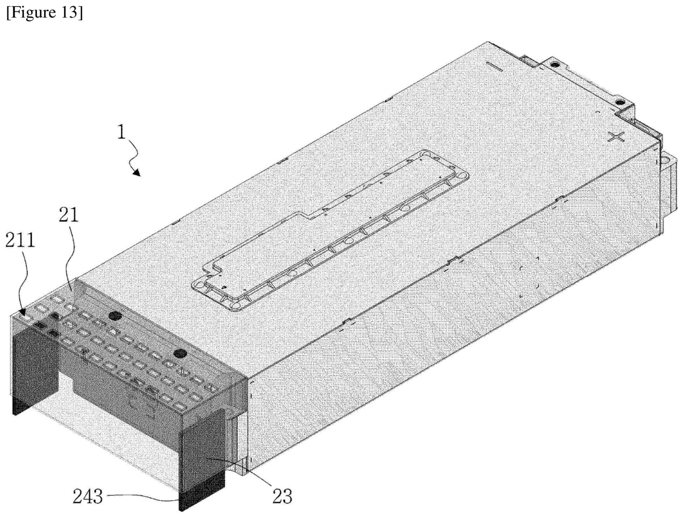

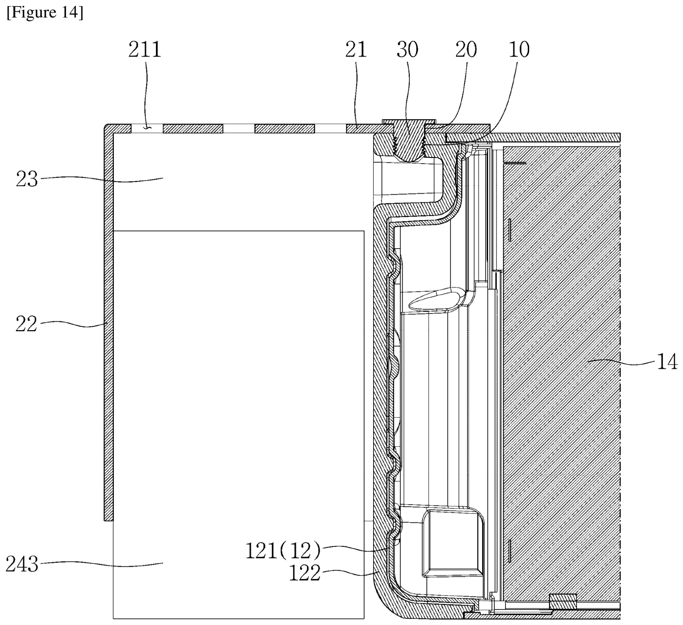

FIGS. 11 and 12 illustrate the structure of the melting frame before melting and a cross-section thereof according to an embodiment of the present invention, respectively, and FIGS. 13 and 14 illustrate the structure and a cross-section thereof after melting of the melting frame, respectively, according to an embodiment of the present invention. Referring to FIGS. 11 to 14, when the upper plate 241 and the lower plate 242 of the melting frame 24 are heated above the melting point, the upper and lower plates may be completely melted faster than other portions of the melting frame 24. Accordingly, when venting occurs in the battery module, gas discharged from the battery module may be discharged to the upper end of the rear cover 2, and dust discharged from the battery module may fall to the lower end of the rear cover 2. Here, such venting may occur with a delay lasting the melting time of the upper plate 241 and the lower plate 242 of the melting frame 24.

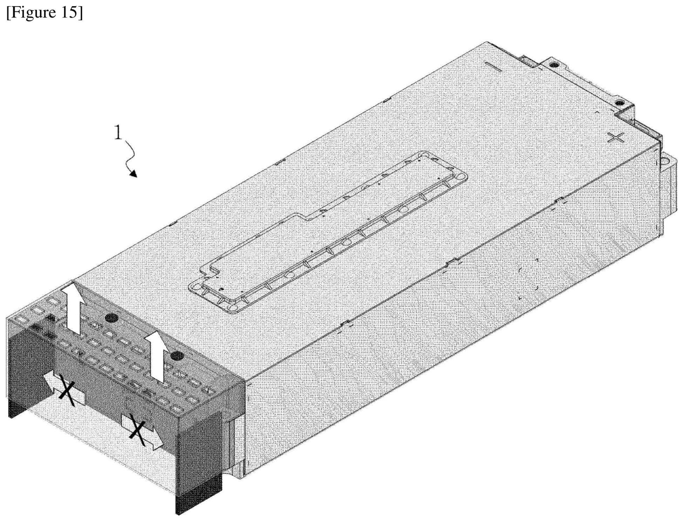

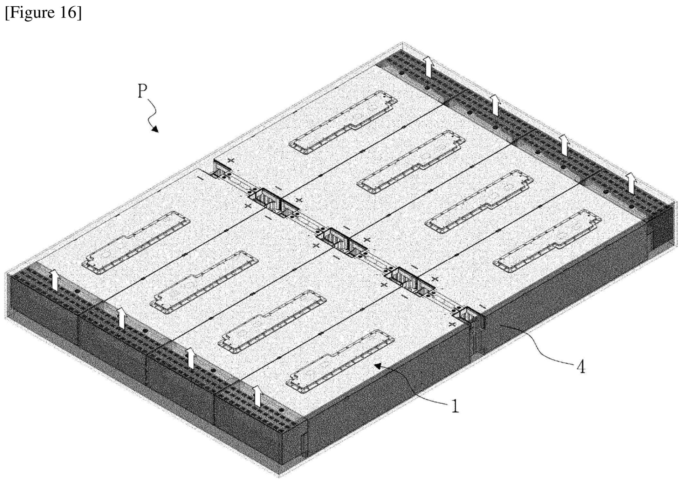

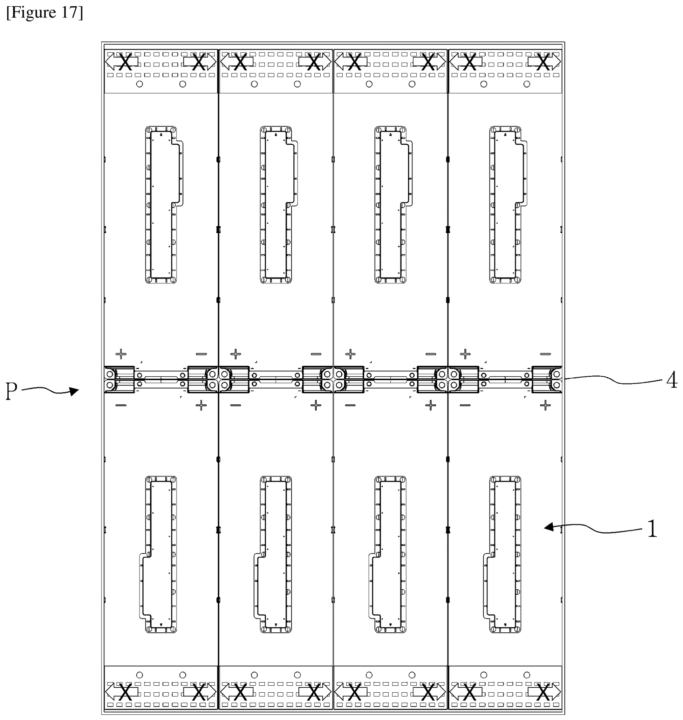

FIG. 15 illustrates the venting action and thermal propagation prevention action of a battery module according to an embodiment of the present invention, and FIGS. 16 and 17 illustrate the venting action and thermal propagation prevention action of a battery pack, respectively, according to an embodiment of the present invention. Referring to FIGS. 15 to 17, a plurality of battery modules 1 may be arranged in a widthwise direction and accommodated in a pack frame 4 to constitute a battery pack P. A terminal may be provided at the front end of the battery module 1 to electrically connect the battery modules 1, and a rear space 41 may be provided between the rear end of the battery module 1 and the pack frame 4. Gas and dust discharged from the battery module 1 may be vented through the rear space.

After the upper plate 241 and the lower plate 242 of the melting frame are melted, the side plate 243 may fall downward. The side plate 243, along with the partition plate 23 of the rear cover, isolates the rear space 41 from two widthwise ends thereof, thereby preventing lateral thermal propagation cause by gas.

In addition, after flowing into the rear space 41, the gas discharged from the battery module 1 may be delayed by the time period during which the venting delaying portion 241 melts and then vented upward through the venting hole 211. Here, the gas may be cooled and discharged as the venting path thereof is bent.

Additionally, the pack frame 4 according to an embodiment of the present invention may be provided with a venting device (not shown) through which gas and dust discharged from the battery module 1 are discharged. Here, the dust is discharged in the rear end of the battery module 1 and falls on the lower end of the rear cover 2 such that there is no risk of obstructing the venting device.

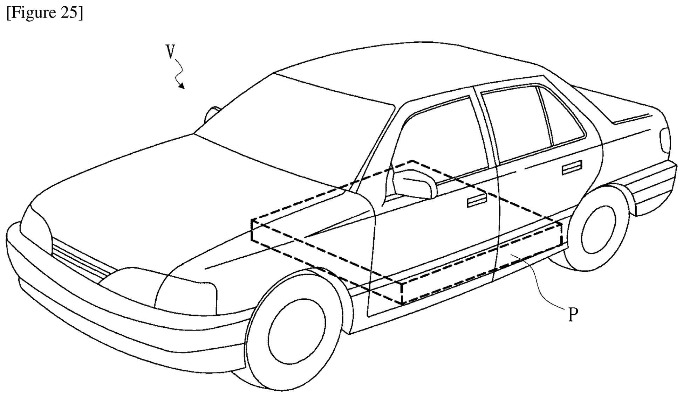

FIG. 25 illustrates the structure of a vehicle containing a battery pack according to the present invention. Referring to FIG. 25, the battery pack P may be built into the vehicle V as a power source. The vehicle V may be an electric vehicle or a hybrid vehicle.

### [SECOND EMBODIMENT]

Parts not separately described in the second embodiment are the same as those in the first embodiment.

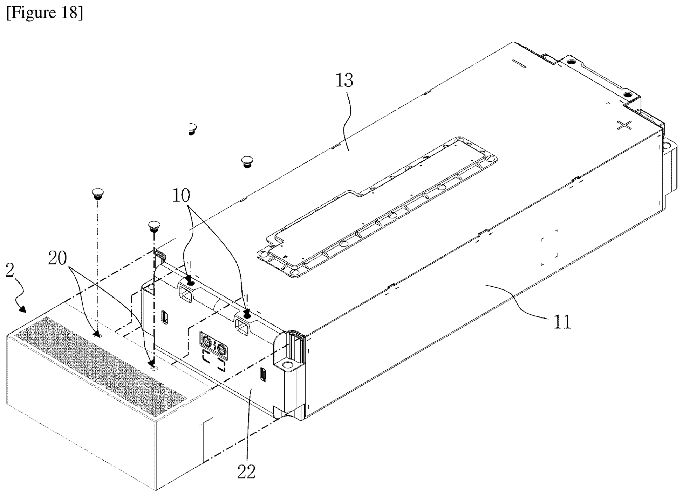

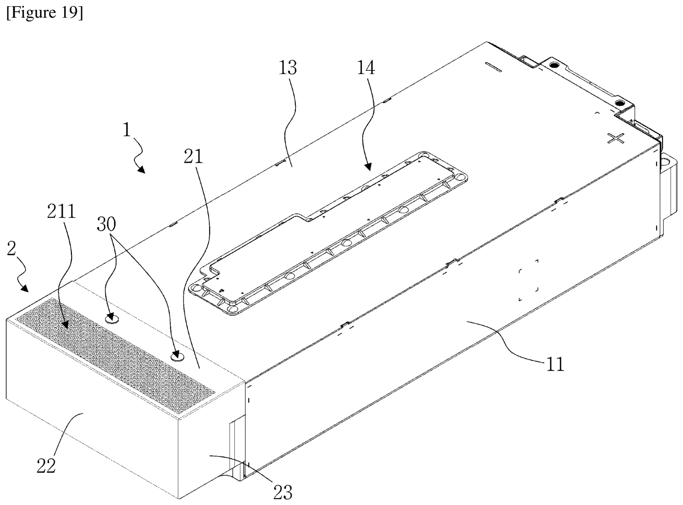

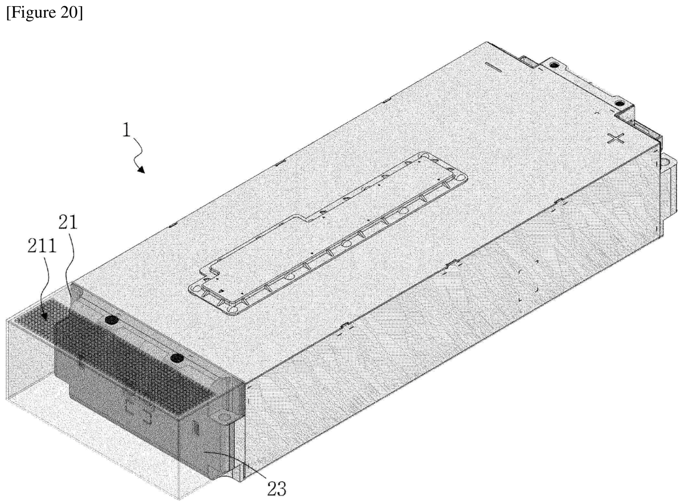

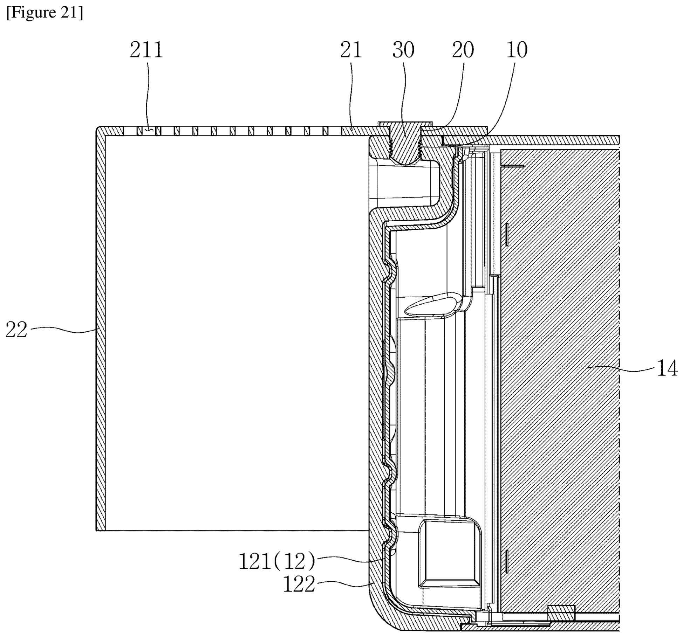

FIGS. 18 and 19 illustrate coupling scheme of a battery module and a rear cover according to another embodiment of the present invention, and FIGS. 20 and 21 illustrate the structure of a battery module and a cross-section thereof, respectively, according to another embodiment of the present invention. Referring to FIGS. 18 to 21, according to another embodiment of the present invention, the venting hole 211 may be covered by a mesh or may have a mesh shape. Alternatively, the venting hole 211 may have a slit shape. However, the shape of the venting hole 211 according to the second embodiment is not limited thereto, and it is sufficient as long as the venting hole 211 has a small opening shape with a width or area smaller than a predetermined value.

According to another embodiment of the present invention, the melting frame 24 may not be provided separately.

According to another embodiment of the present invention, by forming the venting hole 211 small, the flow rate of gas discharged through the venting hole 211 may be reduced, and venting may be delayed even when the melting frame 24 is not separately provided. In addition, according to the second embodiment, the gas discharged in the rear end of the battery module 1 to be initially cooled by bending the venting path is throttled while passing through the venting hole 211 having a small cross-sectional area and then cooled again.

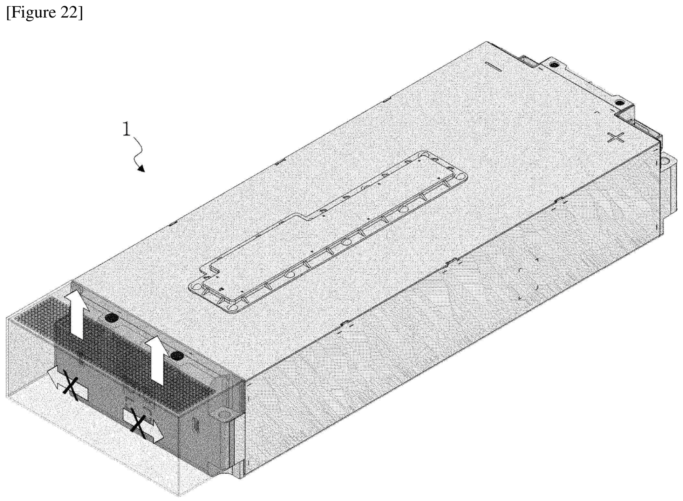

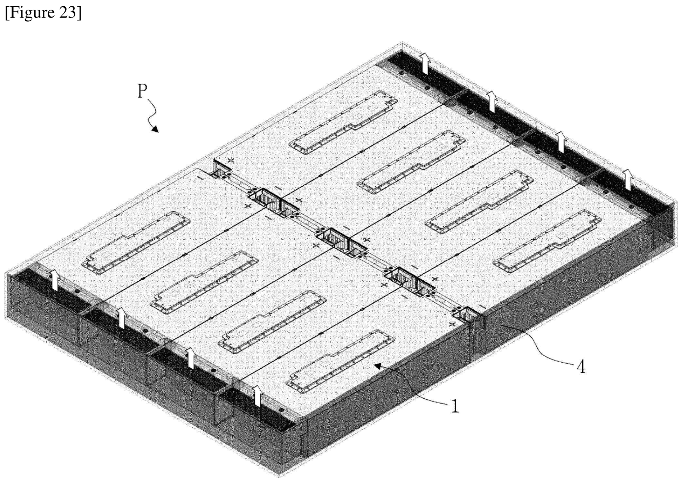

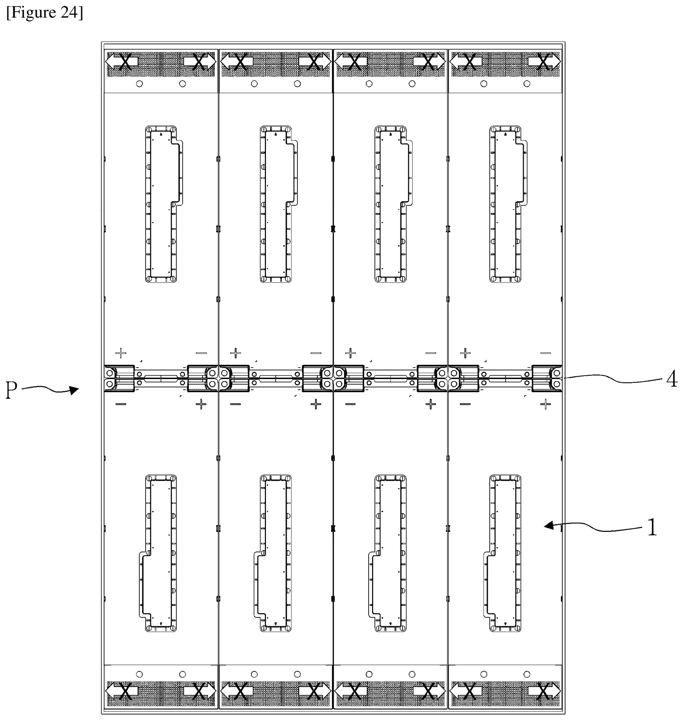

FIG. 22 illustrates the venting action and thermal propagation prevention action of a battery module according to another embodiment of the present invention, and FIGS. 23 and 24 illustrate the venting action and thermal propagation prevention action of a battery pack, respectively, according to another embodiment of the present invention. Referring to FIGS. 22 to 24, in the battery pack P according to another embodiment of the present invention, thermal propagation between modules through the rear space 41 is prevented by the partition plate 23 of the rear cover 2. In addition, according to the second embodiment, the gas discharged from the battery module 1 in the rear direction may be first cooled by passing through a curved path, and then throttled and cooled by passing again through the mesh-shaped venting hole 211. In addition, according to the second embodiment, the dust discharged from the battery module 1 falls onto the open lower end of the rear cover 2, and then is accumulated so as to be discharged upward, thereby preventing the obstruction of the venting path including the venting device.

It should be understood that the described embodiments are illustrative in all respects and not restrictive, and the scope of the present invention will be indicated by the following claims rather than the described detailed description. And the meaning and scope of the claims to be described later, as well as all changes and modifications derived from the equivalent concept should be interpreted as being included in the scope of the present invention.

Although the present invention has been described with reference to the exemplified drawings, it is to be understood that the present invention is not limited to the embodiments and drawings disclosed in this specification, and those skilled in the art will appreciate that various modifications are possible without departing from the scope and idea of the present invention. Further, although the operating effects according to the configuration of the present invention are not explicitly described while describing an embodiment of the present invention, it should be appreciated that predictable effects are also to be recognized by the configuration.

## Claims

1. A battery pack comprising a plurality of battery modules juxtaposed in widthwise direction, each of the plurality of battery modules comprising:
an end plate constituting at least a portion of a rear surface thereof; and a rear cover disposed at a rear end of the end plate, the rear cover having open front end and made of a heat-resistant material,
wherein the rear cover comprises: a pair of partition plates extending in rear direction from two widthwise ends of a rear end of the battery module; and a venting hole facing upward direction.

2. The battery pack of claim 1, wherein the rear cover is fastened to a first fastening hole provided in the battery module.

3. The battery pack of claim 2, wherein the rear cover further comprises an upper plate connecting upper end portions of the pair of partition plates to each other and covers an upper end of the rear cover,
wherein the upper plate is provided with the venting hole and a second fastening hole to face upward,
the first fastening hole is provided to face upward at the rear end of the battery module, and
the rear cover covers a portion of an upper surface of the battery module, and is fastened to the battery module by a fastening member penetrating both the first fastening hole and the second fastening hole.

4. The battery pack of claim 3, wherein the partition plate covers a portion of two widthwise ends of the battery module.

5. The battery pack of claim 1, wherein the rear cover comprises a rear plate connecting the rear ends of the pair of partition plates to each other and covering a rear end of the rear cover.

6. The battery pack of claim 1, wherein the rear cover has an open lower end.

7. The battery pack of claim 1, wherein the rear cover comprises a melting frame, and
the melting frame comprises a venting delaying portion covering the venting hole.

8. The battery pack of claim 7, wherein the venting delaying portion is thinner than other portions of the melting frame.

9. The battery pack of claim 7, wherein the melting frame has a substantially box shape with open front and rear ends, and
an upper plate and a lower plate of the melting frame are thinner than two side plates.

10. The battery pack of claim 7, wherein the melting frame has a predetermined melting point lower than that of the rear cover.

11. The battery pack of claim 1, wherein the rear cover comprises mica (MICA) material.

12. The battery pack of claim 7, wherein the melting frame comprises PC (Polycarbonate) material.

13. The battery pack of claim 1, wherein the venting hole is covered with mesh.

14. The battery pack of claim 1, wherein the venting hole has a mesh shape.

15. The battery pack of claim 1, wherein the venting hole has a slit shape.

16. A vehicle comprising a battery pack of any one of claims 1 to 15.
